# EUROPEAN PATENT APPLICATION

(11) **EP 2 180 205 A1**
(43) Date of publication of application: **28.04.2010**
(21) Application number: 08765770.6
(22) Date of filing: 20.06.2008
(51) Int. Cl.: F16F 7/00, B60J 5/00

(54) **EA MATERIAL**

(30) Priority: 03.08.2007 JP 2007203266
(71) Applicant: Bridgestone Corporation, Tokyo 104-8340 (JP)
(72) Inventor: TADA, Shin, Yokohama-shi Kanagawa 244-8510 (JP); HIRATA, Yutaka, Yokohama-shi Kanagawa 244-8510 (JP)
(74) Representative: Whalley, Kevin
(86) International application number: PCT/JP2008/061350
(87) International publication number: WO 2009/019938

(57) **Abstract**

An energy absorbing member has a mounting portion with a reinforced proximal end, and is easy to produce. The energy absorbing member (20) includes a disc-like main body portion (21) comprised of foamed resin such as hard urethane foam, a mounting portion (22) protruding from the side surface of the main body portion (21), and a reinforcing piece (23) embedded in the mounting portion (22). The reinforcing piece (23) extends from the mounting portion (22) to the interior of the main body portion (21). A mounting hole 24 is formed in the mounting portion (22), for securing the energy absorbing member (20) to a core member or the like. The mounting hole (24) extends through the reinforcing piece (23) in the thickness direction of the mounting portion (22).

## Description

### TECHNICAL FIELD

The present invention relates to an energy absorbing member (often referred to as an "EA member") and, in particular, to an energy absorbing member that can be suitably applied to trimming members for automobiles.

### BACKGROUND ART

For door trimming member or body side trimming member of automobiles, in order to absorb the impact energy upon side collision, energy absorbing members are used, for example as a pad member comprised of hard urethane material. Patent Document 1 discloses a method for mounting an energy absorbing member in the form of a door trimming made of hard urethane material, as shown in Fig. 6. It is noted that Fig. 6 herein corresponds to Fig. 1 of Patent Document 1, showing the mounting structure for the energy absorbing member.

In such conventional structure, the energy absorbing member 1 is comprised of a hard urethane foam includes a main body portion 1b, and a mounting portion in the form of projections 1a protruding from the side surface of the main body portion 1a. These projections 1a are integrally provided with clips 2. In order to secure the energy absorbing member 1 to a core member 5, the absorbing member 1 is laid over the core member 5 so that cylindrical projections 6 protruding from the core member 5 are inserted into the clips 2. These projections 6 are comprised of thermoplastic synthetic resin, such as polyethylene, polypropylene, etc. Subsequently, a suitable melting tool (not shown) is urged against the tip end of the projection 6 so as to deform it into a substantially disc-like holder portion 6a with an increased diameter, thereby fixedly securing the energy absorbing member 1 to the core member 5.

Also, Patent Document 2 discloses an energy absorbing member comprising separate mounting plates, instead of the projections 1a. Fig. 7(a) is a perspective view of the energy absorbing member disclosed in Patent Document 2, and Fig. 7(b) is a sectional view taken along the line B-B in Fig. 7(a).

In this instance, a mounting portion in the form of three mounting plates 13 are provided so as to protrude from the side surface of the main body portion 12 of the energy absorbing member 11. These mounting plates 13 are placed in a mold when molding and foaming the main body portion 12 of the energy absorbing member 11, so as to be integrated therewith. The mounting plates 13 are comprised of urethane resin, nylon, compressed felt, iron, etc. The tip end of each mounting plate 13 has an opening 14 extending therethrough in its thickness direction.

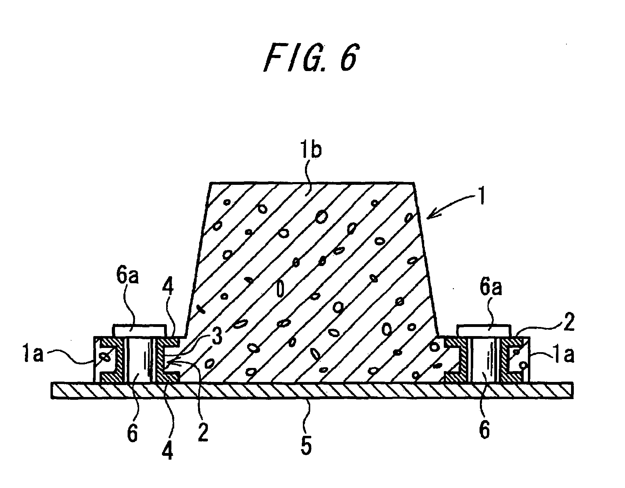

This energy absorbing member 11 is secured to the core member 5 in the same manner as the energy absorbing member as shown in Fig. 6. Thus, the absorbing member 11 is laid over the core member 5 so that cylindrical projections protruding from the core member 5 are inserted into the openings 14, and a suitable melting tool (not shown) is then urged against the tip end of each projection so as to deform it into a substantially disc-like holder portion 6a with an increased diameter, thereby fixedly securing the energy absorbing member 11 to the core member 5.
[Patent Document 1] JP 2005-207524A
[Patent Document 2] JP 2006-022898A

### DISCLOSURE OF THE INVENTION

### (Task to be Solved by the Invention)

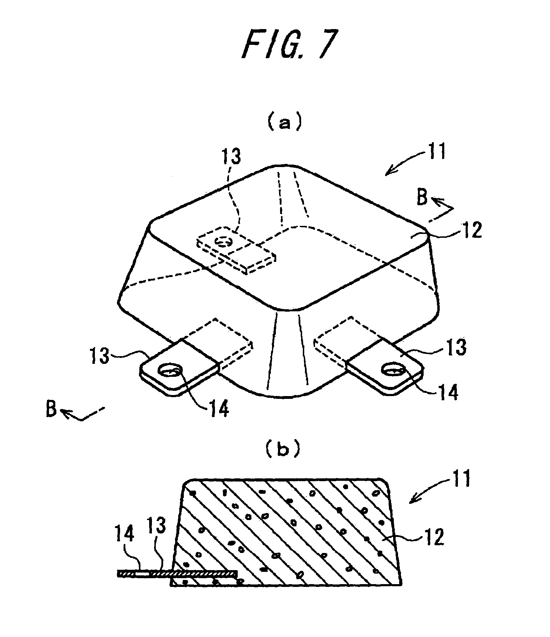

The energy absorbing member disclosed in Patent Document 1 has a potential problem in terms of the strength in that stress concentration tends to occur at or near the proximal end of the projection 1a. On the other hand, in the energy absorbing member disclosed in Patent Document 2, the mounting plates 13 tend to be readily removed from the main body portion 12, besides that the distal end side of the mounting plate is exposed without being covered by the hard urethane foam, resulting in certain difficulties in production. More specifically, in order to produce the energy absorbing member 11 of Figs. 7(a) and (b), urethane resin is injected into, and foamed in the mold cavity, with the distal end side of each mounting plate 13 clamped between the upper and lower mold plates, and the proximal end of the mounting plate 13 protruded into the mold cavity. In this instance, due to dimensional tolerance of the upper and lower mold plates, the clamping of the mounting plate tends to become loose, thereby generating burrs of the urethane resin at the distal end side (exposed portion) of the mounting plate 13.

The present invention has been achieved in view of these problems of the prior art. It is an objection of the present invention to provide an improved energy absorbing member, which is sufficiently reinforced at the proximal end side of the mounting portion, and easy to produce.

### (Means for Solving the Task)

According to the present invention, there is provided an energy absorbing member comprising: a main body portion, which is comprised of an integrally molded foamed resin body, and a mounting portion projecting from a side surface of the main body portion, said energy absorbing member further comprising a reinforcing piece provided in the mounting portion, said reinforcing piece extending into interior of the main body portion.

It is preferred that a mounting hole extends through the mounting portion, said mounting hole extending through the reinforcing piece.

In this instance, it is preferred that the reinforcing piece includes a cylindrical portion that defines an inner peripheral surface of the mounting hole.

It is preferred that the inner peripheral surface of the cylindrical portion has at least one projection.

It is preferred that the projection comprises a ridge provided circumferentially on the inner peripheral surface of the cylindrical portion.

It is preferred that the reinforcing piece comprises a pair of plates that are substantially parallel to each other, and said cylindrical member connecting said plates with each other.

It is also preferred that the reinforcing piece comprises a metal or a synthetic resin.

### (Effects of the Invention)

In the energy absorption member according to the present invention, the reinforcing piece provided in the mounting portion extends into the main body portion, thereby providing high strength at the proximal end portion of the mounting portion. The energy absorption member is provided with the reinforcing piece as being embedded in the mounting portion, and is thus easy to produce

In order to secure the energy absorbing member to a core member or the like, as a pad member of trimmings, the mounting portion is preferably formed with a mounting hole that extends through the reinforcing piece to provide high mounting strength of the energy absorption member to other members, such as a core member.

When the reinforcing piece is provided with a cylindrical portion that defines an inner peripheral surface of the mounting hole, the fittings of the core member such as projections can be easily inserted into the mounting hole. Also, when the inner peripheral surface of the cylindrical portion has at least one projection, preferably a circumferential ridge, the reinforcing piece can be firmly held by pins or the like, provided in the mold for producing the energy absorbing member.

### BRIEF DESCRIPTION OF THE DRAWINGS

Fig. 1(a) is a sectional view as seen in the thickness direction, showing the energy absorbing member according to a first embodiment of the present invention, Fig. 1(b) is a perspective view of a reinforcing piece in the energy absorbing member, and Fig. 1(c) is a sectional view showing a part of the mold for producing the energy absorbing member.

Fig. 2(a) is a plan view of the reinforcing piece as used in a second embodiment of the present invention, Fig. 2(b) is a side view of the reinforcing piece, and Fig. 2(c) is a perspective view of the reinforcing piece.

Fig. 3(a) is a sectional view, in enlarged scale, taken along the line III-III in Fig. 2(b), and Fig. 3(b) is an enlarged view showing the portion B in Fig. 3(a).

Fig. 4 is a perspective view of the energy absorbing member according to a second embodiment of the present invention.

Fig. 5 is a sectional view, in enlarged scale, taken along the line V-V in Fig. 4.

Fig. 6 is a sectional view showing one example of prior art.

Fig. 7(a) is a perspective view showing another example of prior art, and Fig. 7(b) is a sectional view taken along the line B-B in Fig. 7(a).

### (Reference Numerals)

- 20, 30:: Energy absorbing member
- 21, 31:: Main body portion
- 22, 32:: Mounting portion
- 23, 40: Reinforcing piece
- 26:: Mold
- 29:: Mold cavity
- 41:: Upper plate
- 42:: Lower plate
- 43:: Cylindrical portion
- 43a:: Ridge
- 44:: Rib portion

### BEST MODE FOR CARRYING OUT THE INVENTION

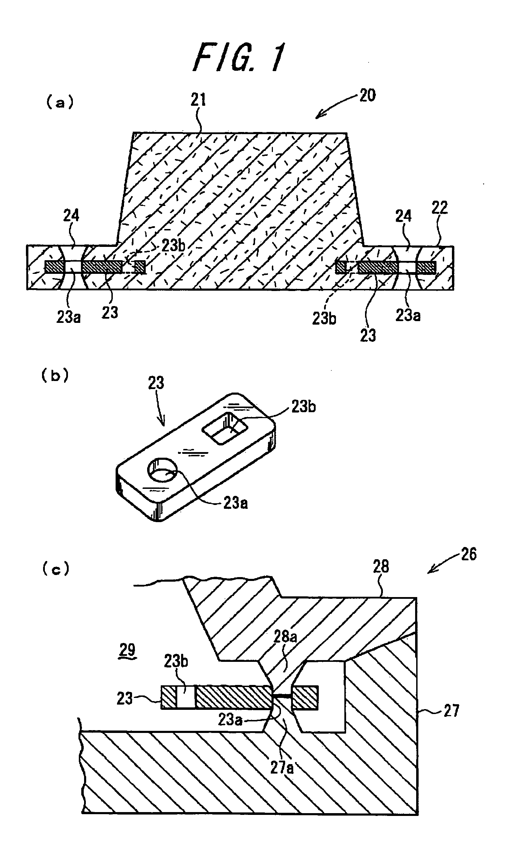

The present invention will be described below with reference to preferred embodiments shown in Figs. 1 to 5.

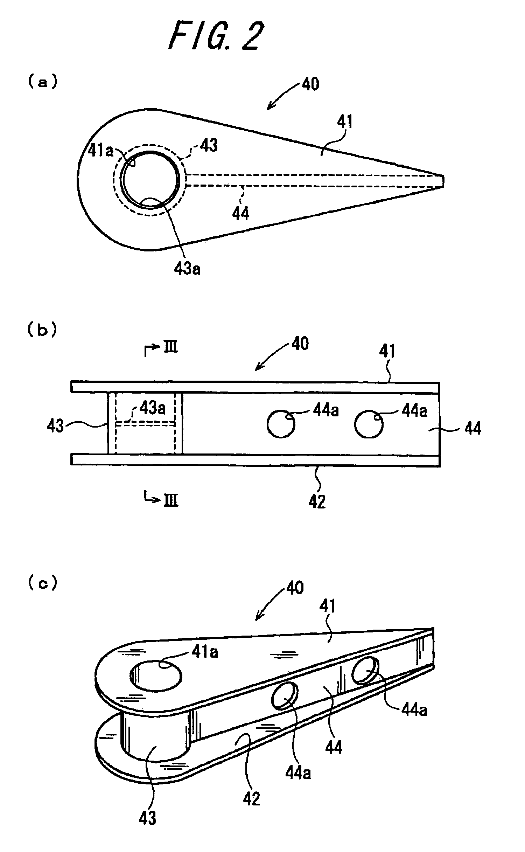

As explained above, Fig. 1 (a) is a sectional view as seen in the thickness direction, showing the energy absorbing member according to the first embodiment of the present invention, Fig. 1(b) is a perspective view of a reinforcing piece in the energy absorbing member, and Fig. 1(c) is a sectional view showing a part of the mold for producing the energy absorbing member. Figs. 2 to 5 are explanatory views of the reinforcing piece used in the second embodiment of the present invention.

The energy absorbing member 20 shown in Figs. 1(a) to 1(c) includes a flat disc-like main body portion 21 made of foamed resin such as hard urethane resin, mounting portions 22 protruding from the side surface f the main body portion 21, and reinforcing pieces 23 embedded in the respective mounting portions 22. The reinforcing piece extends into the interior of the main body portion 21. In Fig. 1(a), the mounting portion 22 on the left side and the mounting portion 22 on the right side are shown as being separate from each other. However, they may be continuous and integral with each other.

The mounting portion 22 is provided with a mounting hole 24 for mounting the energy absorbing member 20 to a core member or the like. The mounting hole 24 extends through the reinforcing piece 23 in the thickness direction of the mounting portion 22. The mounting hole 24 has an inlet portion that is tapered to have a reduced diameter toward the inside. An opening 23 a is formed at the distal end side of the reinforcing piece 23 protruding from the main body portion 21, which is coaxial to the mounting hole 24.

The reinforcing piece 23 has a proximal end side that is formed with an opening 23b. This opening 23b serves to integrate the urethane foam materials on the upper and lower sides of the reinforcing piece with each other, through the opening 23b. This is highly suitable for providing an improved integrity of the reinforcing piece and the urethane materials. The reinforcing piece 23 preferably comprises hard synthetic resin or aluminum or the like metal. More preferably, the reinforcing piece comprises hard synthetic resin of the kind having a good compatibility with urethane foam.

The energy absorbing member 20 is secured to a core material or the like, as in the prior art shown in Fig. 6. Thus, the energy absorbing member 20 is laid over the core member (not shown) so that cylindrical projections protruding from the core member 5 are inserted into the mounting hole 24. These projections are comprised of thermoplastic synthetic resin, such as polyethylene, polypropylene, etc. Subsequently, a suitable melting tool (not shown) is urged against the tip end of the projection so as to deform it into a substantially disc-like holder portion with an increased diameter, thereby fixedly securing the energy absorbing member 20 to the core member. Alternatively, however, the energy absorbing member 20 may be secured to the core member by using a stud bolt, clips of various shape, etc.

In the energy absorbing member 20, the reinforcing piece 23 extends continuously from the mounting portion 22 to the main body portion 21. Thus, even when stresses concentrate at the vicinity of the proximal end of the mounting portion 22, cracks or fractures are not formed in the vicinity of the proximal end. In this instance, it is preferred that the reinforcing piece 23 is arranged in the main body portion 21 by 20-50% of its total length.

The energy absorbing member 20 can be produced by placing the reinforcing piece 23 in a mold 26, as shown in Fig. 1(c), and causing the urethane raw liquid to foam in the mold cavity 29. The mold 26 includes a lower mold plate 27 and an upper mold plate 28, and tapered pins 27a, 28a are provided to protrude from the lower and upper mold plates 27, 28. The tip end of the pin 27a, 28a is inserted into the opening 23a in the reinforcing piece 23 so as to retain the reinforcing piece 23 within the mold cavity 29. Incidentally, the tip end of the pins 27a, 28a inserted into the opening 23a is in the form of a straight cylinder.

In this way, the entirety of the reinforcing piece 23 is placed in the mold 26 and the energy absorbing member 20 is formed with the reinforcing piece inert-molded, it is possible to prevent leakage of the urethane resin to exposed portion of the reinforcing piece as burrs.

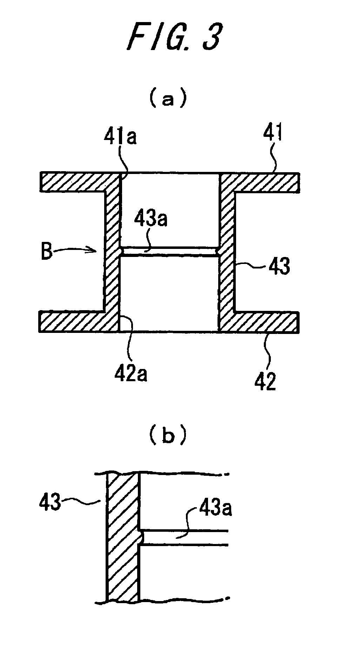

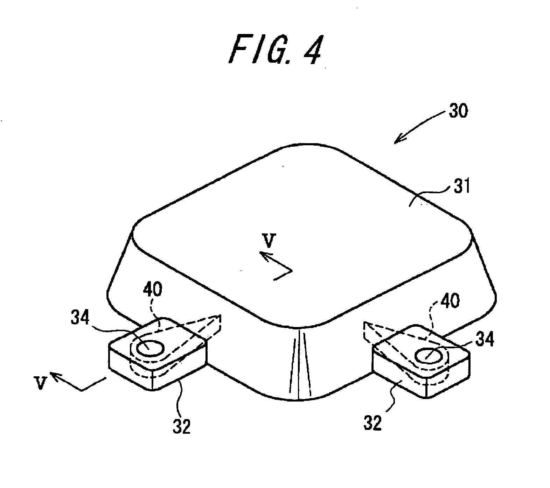

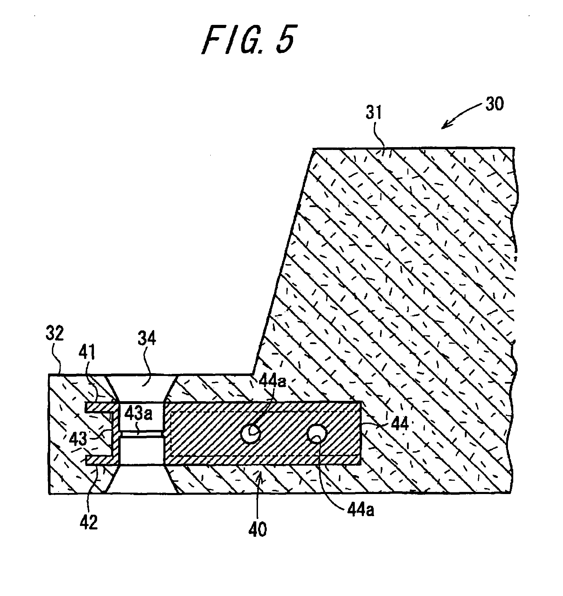

A second embodiment of the present invention will be described below with reference to Figs. 2 to 5. As explained above, Fig. 2(a) is a plan view of the reinforcing piece as used in a second embodiment of the present invention, Fig. 2(b) is a side view of the reinforcing piece, and Fig. 2(c) is a perspective view of the reinforcing piece. Fig. 3(a) is a sectional view, in enlarged scale, taken along the line III-III in Fig. 2(b), and Fig. 3(b) is an enlarged view showing the portion B in Fig. 3(a). Fig. 4 is a perspective view of the energy absorbing member according to a second embodiment of the present invention. Fig. 5 is a sectional view, in enlarged scale, taken along the line V-V in Fig. 4.

As shown in Figs. 4 and 5, the energy absorbing member 30 according to the second embodiment includes a flat disc-like main body portion 31 made of integrally molded hard urethane foam, mounting portions 32 protruding from the side surface f the main body portion 31, and reinforcing pieces 40 embedded in the respective mounting portions 32. The reinforcing piece 40 extends into the interior of the main body portion 31. The mounting portion 32 is provided with a mounting hole 34 that extends through the reinforcing piece 40.

As shown in Figs. 2 and 3, the reinforcing piece 40 includes an upper plate 41 and a lower plate 42, which are in parallel with each other, as well as a cylindrical portion 43 and a rib portion 44 connecting the upper and lower plates 41, 42 with each other. The upper and lower plates 41, 42 are each a plate with an elongated droplet planar shape, and provided with an opening 41a, 42a at its relatively wide distal end side. The cylindrical portion 43 is coaxial with these openings 41a, 42a and has the same diameter as these openings. IN the axial intermediate region of this cylindrical portion, there is provided a circumferential ridge 43 a that extends along the inner peripheral surface. This ridge 43a has a width of about 0.3 - 0.8 mm, and a height of 0.1 - 0.2 mm as measured from the inner peripheral surface.

There is provided a rib portion 44, which is in the form of a flat plate having one end contiguous with the cylindrical portion 43, and another end that extends to the proximal end of the upper and lower plates 41, 42. The rib portion 44 is provided with an opening 44a for integrating the urethane foam materials on both sides of the rib portion 44. Although not shown in the drawings, similar openings may be provided in the upper and lower plates 41, 42.

In this embodiment also, it is preferred that the reinforcing piece 40 is arranged in the main body portion 31 by 20-50% of its total length.

The energy absorbing member 30 is secured to a core material or the like, as in the prior art shown in Fig. 6.

In the energy absorbing member 30 according to the second embodiment, the reinforcing piece 40 is continuously embedded in the region from the mounting portion 32 to the main body portion 31 to provide high strength of the mounting portion 32. Since the reinforcing piece 40 is embedded in the interior of the urethane foam, it is possible to prevent leakage of the urethane resin to exposed portion of the reinforcing piece as burrs.

The energy absorbing member 30 according to the second embodiment can be produced by using a mold as is the case with the energy absorbing member 20 of the previous embodiment. In this instance, since the circumferential ridge 40a is formed on the inner peripheral surface of the cylindrical portion 43 in the reinforcing piece 40, the pin in the lower mold plate can be inserted into the cylindrical portion 43 and urged into the ridge 43 a thereby allowing the reinforcing piece 40 to be firmly held without play. It is assumed that the pin has a diameter that is smaller than the inner diameter of the cylindrical portion 43 it its region except the ridge 43a, and larger than the inner diameter of the cylindrical portion 43 in its region of the ridge 43a.

Since urethane foam enters into the space of the reinforcing piece 40 between the upper and lower plate 41, 42, it is possible to provide an energy absorbing member 30 with improved integrity between the urethane foam and the reinforcing piece 40.

The particular embodiments explained above were presented by way of examples only, and the present invention may be carried out with different modified shape. For instance, there may be provided two or more ridges 43a, the ridge may be interrupted in the circumferential direction, instead of extending along the entire periphery of the inner peripheral surface.

The energy absorbing member according to the present invention may be comprised of resin material other than urethane. The energy absorbing member according to the present inventin may be secured to a member other than core member.

## Claims

1. An energy absorbing member comprising: a main body portion, which is comprised of an integrally molded foamed resin body, and a mounting portion projecting from a side surface of the main body portion,
said energy absorbing member further comprising a reinforcing piece provided in the mounting portion, said reinforcing piece extending into interior of the main body portion.

2. The energy absorbing member according to claim 1, wherein a mounting hole extends through the mounting portion, said mounting hole extending through the reinforcing piece.

3. The energy absorbing member according to claim 2, wherein said reinforcing piece includes a cylindrical portion that defines an inner peripheral surface of the mounting hole.

4. The energy absorbing member according to claim 3, wherein said inner peripheral surface of the cylindrical portion has at least one projection.

5. The energy absorbing member according to claim 5, wherein said projection comprises a ridge provided circumferentially in the inner peripheral surface of the cylindrical portion.

6. The energy absorbing member according to any one of claims 3 to 5, wherein said reinforcing piece comprises a pair of plates that are substantially parallel to each other, and said cylindrical member connecting said plates with each other.

7. The energy absorbing member according to any one of claims 1 to 6, wherein said reinforcing piece comprises a metal or a synthetic resin.
